# FASCICULE DE BREVET EUROPEEN

(11) **EP 0 655 373 B1**
(45) Date de publication et mention de la délivrance du brevet: **07.01.1998**
(21) Numéro de dépôt: 94118632.2
(22) Date de dépôt: 26.11.1994
(51) Int. Cl.: B60S 1/40

(54) **Pièce de raccordement pour relier l'extrémité d'un bras d'essuie-glace à un axe d'articulation d'un balai d'essuie-glace**
Verbindungsstück zum Verbinden des Endteils eines Wischarmes mit dem Gelenkbolzen eines Scheibenwischerblatts
Connector for connecting the end of a wiper arm to the articulation pin of a windscreen wiper blade

(30) Priorité: 29.11.1993 FR 9314250
(43) Date de publication de la demande: 31.05.1995
(73) Titulaire: VALEO SYSTEMES D'ESSUYAGE, 78320 La Verrière (FR)
(72) Inventeur: Raymond, Guy, F-63320 Meilhaud (FR)
(74) Mandataire: Gamonal, Didier

(56) Documents cités:
- EP-A- 0 234 525
- DE-U- 8 509 539
- DE-U- 9 209 226
- FR-A- 2 482 914

## Description

La présente invention concerne une pièce de raccordement, également appelée connecteur, utilisée pour relier l'extrémité d'un bras d'essuie-glace à un élément d'une structure de support de la lame d'essuyage du balai d'essuie-glace.

L'invention concerne plus particulièrement une pièce de raccordement pour relier l'extrémité en forme de crochet en U du bras d'essuie-glace à un axe d'articulation qui s'étend transversalement entre deux ailes latérales parallèles de l'élément de support de la lame d'essuyage, ce dernier étant par exemple réalisé sous la forme d'un étrier principal d'articulation.

On connaît une conception d'une telle pièce de raccordement du type comportant deux joues latérales parallèles dont les faces externes sont prévues pour être reçues entre les faces internes des ailes latérales et dont les faces internes en vis-à-vis sont prévues pour coopérer avec les bords latéraux parallèles du crochet d'extrémité du bras d'essuie-glace, du tue dans lequel les deux joues parallèles comportent chacune une fente débouchant d'une part dans un bord longitudinal inférieur de la joue et, d'autre part, dans un logement de palier dans lequel l'axe d'articulation peut être introduit radialement et qui est formé dans un tronçon tubulaire de palier qui s'étend transversalement entre les deux joues parallèles et dont la surface cylindrique externe est reçue dans le fond du crochet en U de l'extrémité du bras d'essuie-glace, et du type dans lequel les deux joues parallèles sont reliées entre elles par une barre transversale de butée qui est agencée au voisinage des bords longitudinaux supérieurs des joues et qui coopère avec une portion en vis-à-vis de la face supérieure du corps du bras d'essuie-glace qui se prolonge par l'extrémité en forme de crochet.

Ce type de pièce de raccordement est satisfaisant et il permet notamment de réaliser de manière très simple le montage d'un balai d'essuie-glace sur l'extrémité du bras d'essuie-glace.

La partie principale du corps du bras d'essuie-glace et sa portion d'extrémité en forme de crochet sont réalisées sous la forme d'une barre pliée de section rectangulaire dont la largeur correspond sensiblement à la distance séparant les faces internes des joues parallèles.

Une telle conception d'une pièce de raccordement ne permet toutefois pas de monter, à l'aide de la même pièce, un balai d'essuie-glace sur des bras d'essuie-glace de dimensions différentes et notamment lorsque l'épaisseur du bras varie d'un bras à l'autre, cette variation d'épaisseur entraînant une modification du rayon de courbure du crochet en U.

Le document DE-U-92 09226.8 propose une pièce de raccordement qui comporte des ergots qui forment une seconde portion de surface cylindrique décalée longitudinalement vers l'avant de la pièce par rapport au tronçon tubulaire et susceptible d'être reçue dans le crochet en U d'un second bras d'essuie-glace de dimensions différentes de celles du bras sus-mentionné, afin de permettre aussi le montage de ce second bras.

Cependant, dans le dispositif proposé par le document précité, l'immobilisation longitudinale du bras par rapport au palier n'est assurée pour aucun des deux types de bras.

Afin de remédier à cet inconvénient, l'invention propose une pièce de raccordement du type divulgué dans DE-U-92 09226.8 et défini dans le préambule de la revendication 1, cette pièce étant caractérisée en ce que ladite seconde portion de surface cylindrique est formée sur une traverse qui s'étend entre les joues parallèles et en ce que la pièce de raccordement comporte une plaque transversale de butée qui s'étend entre les joues parallèles et en regard de ladite seconde portion de surface cylindrique.

Selon des variantes de réalisation de l'invention :
- les rayons de courbure des deux surfaces cylindriques sont différents ;
- en section longitudinale, la traverse présente une forme de lunule dont le bord droit s'étend sensiblement en regard du tronçon tubulaire de palier ;
- la plaque de butée est agencée au voisinage des bords avant des joues parallèles ;
- chacune des faces internes des joues parallèles comporte un ergot de blocage susceptible de coopérer avec une portion en vis-à-vis de la face inférieure du corps du premier ou du second bras d'essuie-glace ; et
- la pièce est réalisée par moulage en matière plastique.

D'autres caractéristiques et avantages de l'invention apparaîtront à la lecture de la description détaillée qui va suivre pour la compréhension de laquelle on se reportera au dessin annexé dans lequel :
- La figure 1 est une vue en perspective à grande échelle et en coupe longitudinale selon la ligne A-A de la figure 2 d'une pièce de raccordement réalisée conformément aux enseignements de l'invention ;
- la figure 2 est une vue de dessus de la pièce de raccordement illustrée à la figure 1 sur laquelle on a représenté en silhouette une portion d'extrémité d'un premier bras d'essuie-glace ;
- la figure 3 est une vue latérale en élévation de la pièce de raccordement illustrée à la figure 2 ; et
- la figure 4 est une vue en section longitudinale selon la ligne A-A de la figure 2 sur laquelle on a représenté un second bras d'essuie-glace de dimensions différentes de celui illustré aux figures 2 et 3.

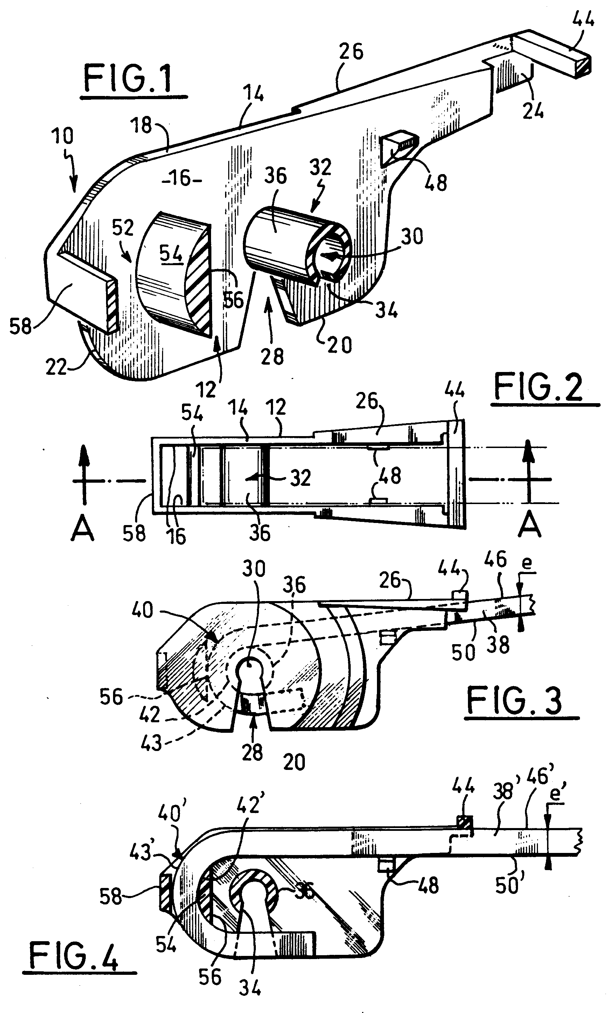

La pièce de raccordement 10 illustrée sur les figures présente une symétrie de conception par rapport à un plan longitudinal médian dont la trace est représentée par la ligne A-A de la figure 2.

La pièce 10 est constituée pour l'essentiel par deux joues latérales parallèles 12 dont chacune comporte une face externe 14, une face interne 16, un bord longitudinal supérieur 18, un bord longitudinal inférieur 20, un bord avant convexe 22 et une portion d'extrémité arrière en forme de patte longitudinale 24.

Les deux faces externes 14 des joues 12 sont prévues pour être reçues, lors de l'assemblage, entre les faces internes en vis-à-vis d'un élément de structure de support de balai d'essuie-glace (non représenté), tel que par exemple un étrier principal du balai d'essuie-glace.

Chaque joue parallèle 12 comporte sur sa face externe 14 un rebord supérieur 26 qui fait saillie transversalement vers l'extérieur qui coopère avec le bord supérieur correspondant de l'aile latérale de l'élément de structure.

Selon une conception connue, chacune des joues 12 comporte une fente 28 sensiblement en forme de V inversé, qui débouche d'une part dans le bord longitudinal inférieur 20 et d'autre part dans un logement de palier cylindrique creux 30.

Le logement de palier 30 est constitué par l'intérieur d'un tronçon tubulaire de palier 32 qui s'étend transversalement entre les faces internes 16 des joues latérales parallèles 12 et qui comporte une fente inférieure d'introduction 34 alignée avec l'ouverture des fentes 28.

Selon une conception connue, les fentes 28 et 34 permettent l'introduction d'un axe d'articulation de l'élément de structure de support de balai dans le logement de palier 30.

La surface cylindrique externe 36 du tronçon tubulaire 32 constitue une surface d'articulation pour la portion d'extrémité d'un bras d'essuie-glace en forme de crochet en U.

Un tel bras d'essuie-glace est illustré aux figures 2 et 3.

Le corps 38 du bras d'essuie-glace, ainsi que sa portion d'extrémité 40 en forme de crochet en U sont réalisés en une seule pièce sous la forme d'une barre de section rectangulaire pliée en U.

Le crochet 40 comporte un fond incurvé en demi-cercle 42 qui, lorsqu'il est en place dans la pièce de raccordement, coopère avec la portion de surface cylindrique 36.

Au voisinage de sa partie arrière, c'est-à-dire sur les ailes arrière 24, la pièce de raccordement 10 comporte également une barre transversale de butée 44 qui s'étend transversalement entre les joues 12 et qui est prévue pour coopérer avec la face supérieure 46 de la portion du corps 38 du bras d'essuie-glace situé en vis-à-vis, comme cela est illustré aux figures 2 et 3.

Le maintien en position de la pièce de raccordement sur l'extrémité du bras d'essuie-glace est complété par deux ergots 48 agencés de manière opposée sur les faces internes 16 des joues latérales 12 et qui coopèrent avec une portion 50 de la face inférieure de la portion du corps 38 du bras d'essuie-glace.

Conformément aux enseignements de l'invention, la pièce de raccordement 10 comporte une traverse supplémentaire d'articulation 52 qui s'étend transversalement entre les joues 12.

La traverse 52 est décalée longitudinalement vers l'avant par rapport au tronçon de palier 32, c'est-à-dire en direction des bords avant 22.

Comme on peut le voir sur les figures 1 et 4, la traverse 56 présente en section sensiblement la forme d'une lunule de manière à définir une seconde portion de surface cylindrique externe d'articulation 54 ainsi qu'une surface verticale de butée 56.

Comme on peut le voir sur la figure 3, la surface verticale de butée 54 formée sur la traverse 52 coopère avec le bord convexe avant 43 du crochet en forme de U pour assurer le positionnement longitudinal de l'extrémité du bras d'essuie-glace par rapport au palier d'articulation.

Conformément à l'invention, et comme cela est illustré à la figure 4, la seconde portion de surface cylindrique externe convexe 54 est prévue pour coopérer avec le fond 42' d'un bras d'essuie-glace de dimensions différentes de celles du premier bras illustré aux figures 2 et 3.

Dans l'exemple illustré sur la figure 4, le corps 38' du second bras d'essuie-glace et l'extrémité en forme de crochet 40' sont réalisés dans une barre de section rectangulaire de même largeur mais d'épaisseur "e'" supérieure à l'épaisseur "e" du bras 38.

Il résulte également de cet accroissement d'épaisseur un accroissement du rayon de courbure de l'extrémité en forme de crochet en U.

En position montée, et comme cela est illustré à la figure 4, la portion du corps 38' coopère également avec la barre de butée 44 et avec les ergots 48 tandis que le bord avant incurvé convexe 43' de l'extrémité en forme de crochet 40' est immobilisé axialement par une plaque de butée 58 qui s'étend transversalement entre les joues parallèles 12 au voisinage des bords avant 22.

La conception de la pièce de raccordement 10 selon l'invention qui vient d'être décrite permet donc d'assurer le montage de bras d'essuie-glace de deux dimensions différentes tout en conservant le même processus de montage et d'assemblage et des moyens identiques de blocage en position assemblée et montée.

Comme on peut le constater en comparant les figures 3 et 4, le bras d'essuie-glace 38 de plus faible épaisseur "e" est, en position montée, légèrement incliné par rapport à l'horizontal, c'est-à-dire par rapport à la position qu'occupe le bras 38' illustré à la figure 4.

Quelle que soit la dimension choisie, l'assemblage d'un balai d'essuie-glace à l'extrémité d'un bras d'essuie-glace au moyen d'une pièce de raccordement 10 selon l'invention s'effectue de manière classique en commençant par emboîter élastiquement l'axe d'articulation dans le logement de palier 30 puis en amenant le connecteur dans une position dite de monture, c'est-à-dire en le faisant sensiblement pivoter de 90° par rapport à la position horizontale illustrée sur les figures, puis en mettant en place l'extrémité en forme de crochet du bras d'essuie-glace et en rabattant enfin le connecteur sur le bras jusqu'au blocage du connecteur sur ce dernier par la barre de butée 44 et les ergots 48.

## Revendications

Il n'existe pas d'erreur possible lors du montage d'un bras car les dimensions de ce dernier assurent un détrompage pour son montage, le montage d'un bras de petites dimensions 38 étant par exemple impossible autour de la traverse d'articulation 52 et inversement.

1. Pièce (10) de raccordement pour relier l'extrémité en forme de crochet en U d'un premier bras d'essuie-glace à un axe d'articulation qui s'étend transversalement entre deux ailes latérales parallèles d'un élément de structure de support de la lame d'essuyage d'un balai d'essuie-glace, du type comportant deux joues latérales parallèles (12) dont les faces externes (14) sont prévues pour être reçues entre les faces internes des ailes latérales et dont les faces internes (16) en vis-à-vis sont prévues pour coopérer avec les bords latéraux parallèles du crochet d'extrémité dudit premier bras d'essuie-glace, du type dans lequel les deux joues parallèles (12) comportent chacune une fente (28) débouchant d'une part dans un bord longitudinal inférieur (20) de la joue (12) et, d'autre part, dans un logement de palier (30) dans lequel l'axe d'articulation peut être introduit radialement et qui est formé dans un tronçon tubulaire de palier (32) qui s'étend transversalement entre les joues parallèles (12) et dont la surface cylindrique externe (36) est reçue dans le fond du crochet en U de l'extrémité dudit premier bras d'essuie-glace, du type dans lequel les deux joues parallèles sont reliées entre elles par une barre transversale de butée (44) qui est agencée au voisinage des bords longitudinaux supérieurs (18) des joues (12) à l'arrière de la pièce (10) et qui coopère avec une portion en vis-à-vis de la face supérieure du corps du bras d'essuie-glace, et du type comportant une seconde portion de surface cylindrique (54) qui est décalée longitudinalement vers l'avant de la pièce (10) par rapport au tronçon tubulaire (32) et qui est susceptible d'être reçue dans le fond (42') du crochet en U (40') de l'extrémité d'un second bras d'essuie-glace (38') de manière à permettre le montage de deux bras d'essuie-glace de dimensions différentes, caractérisée en ce que ladite seconde portion de surface cylindrique (54) est formée sur une traverse (52) qui s'étend entre les joues parallèles (12) et en ce que la pièce de raccordement comporte une plaque transversale de butée (58) qui s'étend entre les joues parallèles (12) et en regard de ladite seconde portion de surface cylindrique (54).

2. Pièce de raccordement selon la revendication 1, caractérisée en ce que les rayons de courbure des deux surfaces cylindriques (36, 54) sont différents.

3. Pièce de raccordement selon l'une quelconque des revendications 1 et 2, caractérisée en ce que, en section longitudinale, la traverse (52) présente une forme de lunule dont le bord droit (56) s'étend sensiblement en regard du tronçon tubulaire de palier (32).

4. Pièce de raccordement selon l'une quelconque des revendications 1 à 3, caractérisée en ce que la plaque de butée (58) est agencée au voisinage des bords avant (22) des joues parallèles (12).

5. Pièce de raccordement selon l'une quelconque des revendications précédentes, caractérisée en ce que chacune des faces internes (16) des joues parallèles (12) comporte un ergot de blocage (48) susceptible de coopérer avec une portion en vis-à-vis (50, 50') de la face inférieure du corps (38, 38') du premier ou du second bras d'essuie-glace.

6. Pièce de raccordement selon l'une quelconque des revendications précédentes, caractérisée en ce qu'elle est réalisée par moulage en matière plastique.

## Claims

1. A connector (10) for joining the end, in the form of a U-shaped hook, of a first screen wiper arm to a pivot pin which extends transversely between two parallel side wing portions of a structural element for supporting the wiping strip of a screen wiper blade, being of the type having two parallel side portions (12), the outer faces (14) of which are arranged to be received between the inner faces of the side wing portions, the inner faces (16), facing towards each other, of the parallel side portions being arranged to cooperate with the parallel side edges of the terminal hook of the said first screen wiper arm, being further of the type in which each of the two parallel portions (12) includes a slot (28) which is open firstly in a lower longitudinal edge (20) of the side portion (12), and secondly into a bearing housing (30), into which the pivot pin can be introduced radially and which is formed in a tubular bearing element (32) that extends transversely between the parallel side portions (12), the outer cylindrical surface (36) of the tubular bearing element being received in the base of the U-shaped hook at the end of the said first screen wiper arm, being further of the type in which the two parallel side portions are joined together by a transverse thrust bar (44) which is located close to the upper longitudinal edges (18) of the side portions (12) at the rear end of the connector (10), and which cooperates with a facing portion of the upper face of the body of the screen wiper arm, and being further of the type comprising a second cylindrical surface portion (54) which is offset longitudinally towards the front of the connector (10) with respect to the tubular bearing element (32), and which is adapted to be received in the base (42') of the U-shaped hook (40') at the end of a second screen wiper arm (38'), so as to enable two screen wiper arms of different dimensions to be fitted, characterised in that the said second cylindrical surface portion (54) is formed on a transverse element (52) which extends between the parallel side portions (12), and in that the connector includes a transverse abutment plate portion (58) which extends between the parallel side portions (12) and which faces towards the said second cylindrical surface portion (54).

2. A connector according to Claim 1, characterised in that the radii of curvature of the two cylindrical surfaces (36, 54) are different.

3. A connector according to Claim 1 or Claim 2, characterised in that, in longitudinal cross section, the transverse element (52) has a half-moon shape, the straight edge (56) of which lies in substantially facing relationship with the tubular bearing element (32).

4. A connector according to any one of Claims 1 to 3, characterised in that the abutment plate portion (58) is disposed close to the front edges (22) of the parallel side portions (12).

5. A connector according to any one of the preceding Claims, characterised in that each of the inner faces (16) of the parallel side portions (12) includes a stop nose (48) adapted to cooperate with a facing portion (50, 50') of the lower face of the body (38, 38') of the first or second screen wiper arm.

6. A connector according to any one of the preceding Claims, characterised in that it is made by moulding in a plastics material.

## Patentansprüche

1. Verbindungsstück (10) zum Verbinden des in Form eines U-förmigen Hakens ausgebildeten Endteils eines ersten Wischarms mit einem Gelenkbolzen, der sich quer zwischen zwei parallelen Seitenschenkeln eines Strukturelements zur Halterung des Wischergummis eines Scheibenwischerblatts erstreckt, umfassend zwei parallele Seitenwangen (12), deren Außenflächen (14) zum Einsetzen zwischen den Innenflächen der Seitenschenkel vorgesehen sind, und deren gegenüberliegende Innenflächen (16) für das Zusammenwirken mit den parallelen Seitenkanten des Endhakens des besagten ersten Wischarms vorgesehen sind, wobei die beiden parallelen Seitenwangen (12) jeweils einen Schlitz (28) enthalten, der einerseits in eine untere Längskante (20) der Seitenwange (12) und andererseits in eine Lageraufnahme (30) mündet, in die der Gelenkbolzen radial eingesetzt werden kann und die in einem rohrförmigen Lagerstück (32) ausgebildet ist, das sich quer zwischen den parallelen Seitenwangen (12) erstreckt und dessen zylindrische Außenfläche (36) in den Boden des U-förmigen Hakens des Endteils des besagten Wischarms eingesetzt ist, wobei die beiden parallelen Seitenwangen durch einen Queranschlagstab (44) miteinander verbunden sind, der in der Nähe der oberen Längskanten (18) der Seitenwangen (12) hinter dem Verbindungsstück (10) angeordnet ist und der mit einem gegenüberliegenden Abschnitt der Oberseite des Körpers des Wischarms zusammenwirkt, und umfassend eine zweite zylindrische Teilfläche (54), die in Längsrichtung zur Vorderseite des Verbindungsstücks (10) im Verhältnis zum rohrförmigen Stück (32) versetzt ist und die in den Boden (42') des U-förmigen Hakens (40') des Endteils eines zweiten Wischarms (38') eingesetzt werden kann, um die Montage von zwei Wischarmen mit unterschiedlichen Abmessungen zu ermöglichen , **dadurch gekennzeichnet,** daß die besagte zweite zylindrische Teilfläche (54) auf einem Querstück (52) ausgebildet ist, das sich zwischen den parallelen Seitenwangen (12) erstreckt, und daß das Verbindungsstück eine Queranschlagplatte (58) umfaßt, die sich zwischen den parallelen Seitenwangen (12) und gegenüber der besagten zweiten zylindrischen Teilfläche (54) erstreckt.

2. Verbindungsstück nach Anspruch 1 , **dadurch gekennzeichnet,** daß die Krümmungsradien der beiden zylindrischen Flächen (36, 54) verschieden sind.

3. Verbindungsstück nach einem der Ansprüche 1 und 2, **dadurch gekennzeichnet,** daß das Querstück (52) im Querschnitt eine Möndchenform aufweist, deren rechte Kante (56) sich in etwa gegenüber dem rohrförmigen Lagerstück (32) erstreckt.

4. Verbindungsstück nach einem der Ansprüche 1 bis 3, **dadurch gekennzeichnet,** daß die Anschlagplatte (58) in der Nähe der Vorderkanten (22) der parallelen Seitenwangen (12) angeordnet ist.

5. Verbindungsstück nach einem der vorangehenden Ansprüche, **dadurch gekennzeichnet**, daß jede der Innenflächen (16) der parallelen Seitenwangen (12) eine Sperrnase (48) umfaßt, die mit einem gegenüberliegenden Abschnitt (50, 50') der Unterseite des Körpers (38, 38') des ersten oder zweiten Wischarms zusammenwirken kann.

6. Verbindungsstück nach einem der vorangehenden Ansprüche, **dadurch gekennzeichnet,** daß es als Formteil aus Kunststoff ausgeführt ist.
